# EUROPÄISCHE PATENTSCHRIFT

(11) **EP 2 180 973 B1**
(45) Veröffentlichungstag und Bekanntmachung des Hinweises auf die Patenterteilung: **05.01.2011**
(21) Anmeldenummer: 08801165.5
(22) Anmeldetag: 14.08.2008
(51) Int. Cl.: B23P 19/02, F15B 11/22, F15B 15/14

(54) **HYDRAULISCHE RADSATZPRESSE**
HYDRAULIC WHEEL SET PRESS
PRESSE HYDRAULIQUE À ESSIEU DE ROUE

(30) Priorität: 16.08.2007 DE 202007011481 U
(43) Veröffentlichungstag der Anmeldung: 05.05.2010
(73) Patentinhaber: Hegenscheidt-MFD GmbH & Co. KG, 41812 Erkelenz (DE)
(72) Erfinder: BOMS, Manfred, 41844 Wegberg (DE); REICHE, Hans-Joachim, 40699 Erkrath (DE); HEIMANN, Alfred, 52078 Aachen (DE)
(74) Vertreter: Findeisen Hübner Neumann
(86) Internationale Anmeldenummer: PCT/DE2008/001342
(87) Internationale Veröffentlichungsnummer: WO 2009/021500

(56) Entgegenhaltungen:
- WO-A-2007/059723
- GB-A- 750 282
- US-A- 3 848 525
- US-A- 3 916 499
- US-A- 3 995 361
- US-A- 4 214 363
- US-A- 6 128 814

## Beschreibung

Die Erfindung betrifft eine hydraulische Radsatzpresse zum gleichzeitigen Aufpressen von zwei Rad- oder Bremsscheiben auf eine Radachse mit einer auf einem Fundament gelagerten Rahmenkonstruktion aus zwei gleichartigen vertikalen Pressenständern, die in einem gegenseitigen Abstand über horizontale Traversen miteinander fest verbunden sind und jeweils ein Gehäuse aufweisen zur Aufnahme eines Zentrierzylinders, der an einem Ende der Radachse angreift, und eines konzentrisch zum Zentrierzylinder angeordneten Presszylinders, der an der aufzupressenden Rad- oder Bremsscheibe angreift, sowie Steuereinrichtungen zur Beaufschlagung jedes der beiden Zylinder mit einem Druckmittel.

Eine hydraulische Radsatzpresse dieser Art ist beispielsweise aus US 3,995,361 bekannt. Diese bekannte Maschine weist zwei Stirneinheiten auf, die identisch und über Traversen miteinander fest verbunden sind. In den Stirneinheiten sind jeweils ein zentrischer Zentrierzylinder und ein den zentrischen Zentrierzylinder konzentrisch umgebender Presszylinder angeordnet. Der Zentrierzylinder wird mit einem Druckmittel beaufschlagt. Wenn sich der Zentrierzylinder vom Druck beaufschlagt in Richtung auf die Radachse bewegt, dreht sich ein Ritzel um die Längsachse des Zentrierzylinders (US 3,995,361, Spalte 3, Zeilen 47 und 48). Eine äußere Kraftquelle gibt die Geschwindigkeit der Bewegung des Zentrierzylinders vor (US 3,995,361, Spalte 4, Zeilen 1 und 2). Beide Zentrierzylinder bewegen sich nach Beaufschlagung mit dem Druckmittel hinsichtlich ihrer Geschwindigkeit und axialen Entfernung synchron aufeinander zu (US 3,995,361, Spalte 4, Zeilen 7 bis 12). Nachdem die Radachse in der axialen Richtung innerhalb der Radsatzpresse zentriert ist, wird eine gleichartige Bewegung von jeder Radscheibe auf ihrem Sitz auf der Radachse ermöglicht (US 3,995,361, Spalte 5, Zeilen 30 bis 33). Während die Räder auf die Radachse gepresst werden, vermindert jede Tonne Presskraft an den Rädern eine Tonne Presskraft am Zentrierzylinder. Das Vorspannen der Presse mit einer Kraft, die höher ist als die Presskraft für die Räder, leistet der Presskraft Widerstand und stellt sicher, dass sich die Radachse nicht bewegt während das Rad aufgepresst wird. Dies gewährleistet eine Präzisionsmontage der Räder auf der Radachse, weil es keine Verformungen der Presse gibt (US 3,995,361, Spalte 6, Zeilen 8 bis 16). Das Vorspannen der Radsatzpresse erfolgt über das Werkstück Radachse selbst (US 3,995,361, Spalte 6, Zeilen 29 und 30).

Nachteilig an der bekannten Radsatzpresse ist die mechanische Gleichlaufsteuerung der Zentrierzylinder. Hierbei kann nicht gewährleistet werden, dass erhöhte hydraulische Druckkräfte auch von den Ritzeln aufgenommen werden müssen, welche für den Gleichlauf der Zentrierzylinder sorgen. Als Folge stellt sich ein frühzeitiger, erhöhter Verschleiß an den Ritzeln des Gleichlaufantriebs ein. Da davon auszugehen ist, dass die Presskräfte, die erforderlich sind, um die beiden Radscheiben auf die Radachse aufzubringen, immer unterschiedlich sind, wirken sich derartige Unterschiede ebenfalls nachteilig auf die Steuerung und die Mechanik der bekannten Radsatzpresse aus.

Daraus ergibt sich die Aufgabe für die vorliegende Erfindung, eine Radsatzpresse zum synchronen Aufpressen von Brems- oder Radscheiben auf eine Radachse vorzuschlagen, bei welcher der Kräfteausgleich innerhalb der Maschine allein durch das hydraulische Druckmittel herbeigeführt werden kann, mit dem die Zentrier- und die Presszylinder beaufschlagt werden.

Erfindungsgemäß wird diese Aufgabe durch Messeinrichtungen gelöst, welche auf dem Fundament vorgesehen sind, auf dem die Radsatzpresse steht, die den jeweiligen Hub der Zylinder der Radsatzpresse erfassen und zugleich mit einer Steuereinrichtung verbunden sind, welche dazu vorgesehen ist, in Abhängigkeit vom Hub der Zylinder deren Beaufschlagung mit dem Druckmittel zu regeln. Im konkreten Fall liegt also die Messeinrichtung außerhalb der Maschine und erfasst die Bewegungen der Zentrier- und Presszylinder von einer Stelle aus, die von der Rahmenkonstruktion der Radsatzpresse unabhängig ist. Unterschiede der Bewegungen von Zentrier- und Presszylindern werden erfasst und in entsprechende Steuerbefehle hinsichtlich der Menge oder des Druckes des zugeführten Druckmittels umgewandelt. Auf diese Weise wird in jeder Phase des Prozesses unter optimalen Betriebsbedingungen gearbeitet.

Nach einer ersten bevorzugten Ausführungsform weist das Gehäuse im Pressenständer eine mittige Zylinderkammer zur Aufnahme des Zentrierzylinders und eine die Zylinderkammer konzentrisch umgebende Ringkammer zur Aufnahme des Presszylinders auf, wie das an sich aus der bereits zitierten US 3,995,361 bekannt ist.

Eine Vereinfachung des Gehäuses erhält man, wenn das Gehäuse eine Zylinderkammer aufweist, die zur Aufnahme des Presszylinders vorgesehen ist und der Presszylinder eine mittige Zylinderkammer zur Aufnahme des Zentrierzylinders. Hierbei ergibt sich eine teleskopartige Anordnung von Zentrier- und Presszylindern. Sowohl der Zentrierzylinder als auch der Presszylinder weisen jeweils zwei Anschlüsse auf, über die ihnen das Druckmittel zugeführt wird bzw. über welche das Druckmittel abfließen kann.

Als Messeinrichtung für die Ermittlung der Hübe der Zylinder der Radsatzpresse hat sich ein neuartiges Bandmaß erwiesen, das mit großer Genauigkeit, welche hinabreicht bis in den ¹/₁₀₀ Bereich eines Millimeters, die jeweilige Stellung des Kolbens des jeweiligen Zylinders angibt.

Nachfolgend wird die Erfindung an zwei Ausführungsbeispielen näher beschrieben.

Es zeigen jeweils in großer Vereinfachung und weitgehend schematisch in der Seitenansicht die
- Fig. 1 eine erste Ausführungsform einer Radsatzpresse und
- Fig. 2 ein Steuerschema
- Fig. 3 eine zweite Ausführungsform einer Radsatzpresse.

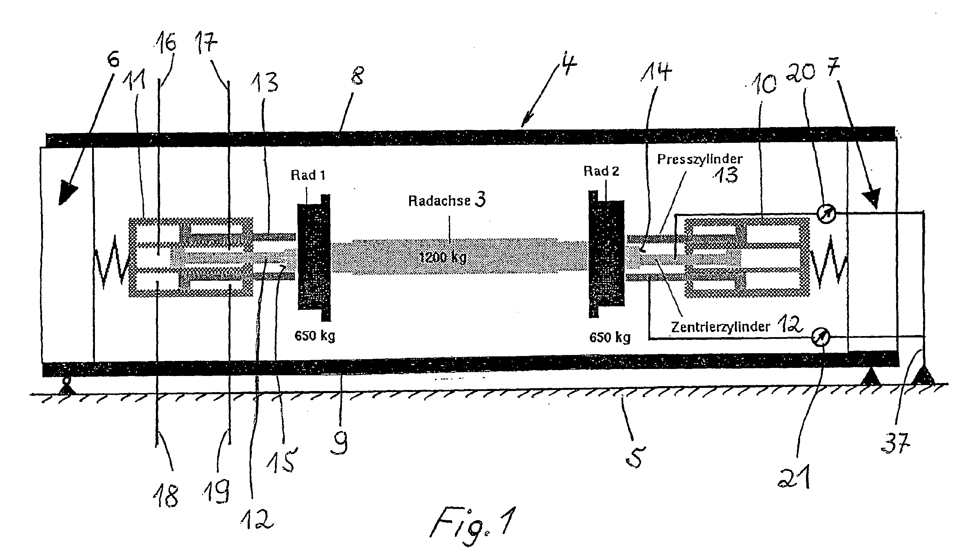

Die hydraulische Radsatzpresse zum gleichzeitigen Aufpressen von zwei Radscheiben 1, 2 auf eine Radachse 3 besteht aus einer Rahmenkonstruktion 4, welche auf einem Fundament 5 gelagert ist. Beim Fundament 5 kann es sich beispielsweise um den Werkstättboden handeln. Die Rahmenkonstruktion 4 weist zwei gleichartige vertikale Pressenständer 6 und 7 auf. Wie in der Fig. 1 erkennbar, haben die beiden vertikalen Pressenständer 6 und 7 einen gegenseitigen Abstand voneinander. Die Pressenständer 6 und 7 sind über mehrere horizontale Traversen 8 und 9 fest miteinander verbunden. Mit den Pressenständern 6 und 7 fest verbunden ist jeweils ein Gehäuse 10 und 11. Wie die Pressenständer 6 und 7 sind auch die Gehäuse 10 und 11 gleichartig und identisch, allerdings spiegelbildlich zueinander angeordnet. In jedem Gehäuse 10 und 11 ist ein Zentrierzylinder 12 horizontal verschiebbar gelagert. Konzentrisch um den Zentrierzylinder 12 herum ist ein Presszylinder 13 angeordnet. Die Zentrierzylinder 12 greifen an den äußeren Enden 14 und 15 der Radachse 3 an. Die Kolben der Presszylinder 13 greifen hingegen jeweils an den Radscheiben 1 und 2 an. Über äußere Anschlüsse 16 und 17 werden die Zentrierzylinder 12 mit einem Druckmittel versorgt, während über äußere Anschlüsse 18 und 19 die Presszylinder 13 mit einem Druckmittel beaufschlagt werden.

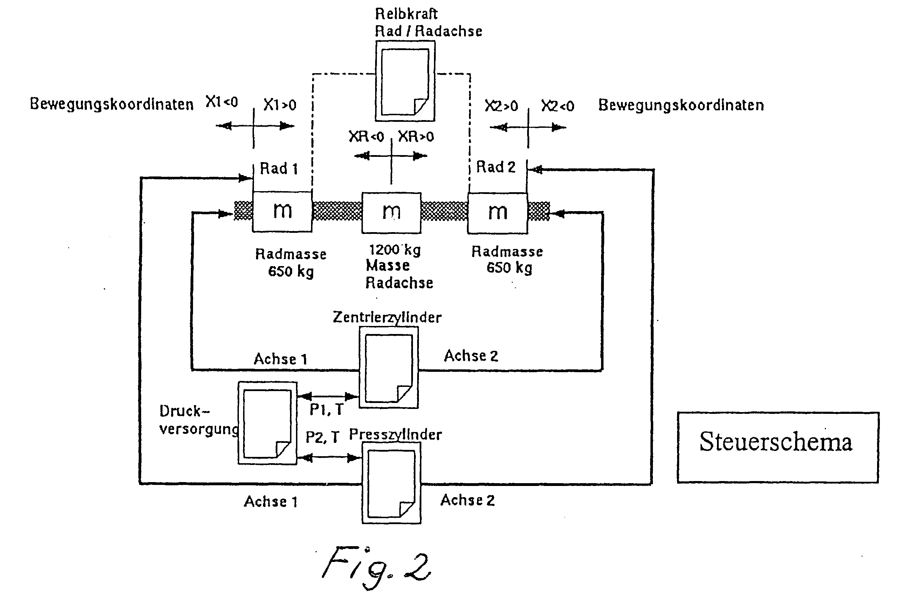

Auf der rechten Seite der Darstellung der Figur 1 ist der Zentrierzylinder 12 mit einer Messeinrichtung 20 verbunden. Ähnliches gilt für den Presszylinder 13, der seinerseits mit einer Messeinrichtung 21 verbunden ist. Beide Messeinrichtungen 20 und 21 sind aus der Rahmenkonstruktion 4 herausgeführt und über eine Abstützung 37 mit dem Fundament 5 verbunden. Die Messeinrichtung 20 erfasst laufend den Hub des Zentrierzylinders 12 und die Messeinrichtung 21 erfasst laufend den Hub des Presszylinders 13 zugleich auf der rechten und der linken Seite der Radsatzpresse. Die Signale der Messeinrichtungen 20 und 21 werden einer Steuereinrichtung 22 zugeführt, die beispielsweise in der Fig. 2 schematisch dargestellt ist. Die Signale der Messeinrichtungen 20 bilden die Bewegungskoordinaten X. Die Signale der Messeinrichtungen 21 entsprechen den Reibkräften XR zwischen den Rädern 1 und 2 und der Radachse 3. Daraufhin werden aus einer gemeinsamen Druckversorgung die Zentrierzylinder 12 mit einem Druck P1 und die Presszylinder 13 mit einem Druck P2 beaufschlagt.

Der Bewegungsablauf (Pressvorgang) stellt sich ungefähr wie folgt dar:

In die Rahmenkonstruktion 4 wird ein vorbereiteter Radsatz eingelegt. Der vorbereitete Radsatz besteht aus der Radachse 3 und zwei Radscheiben 1 und 2, welche von den beiden äußeren Enden 14 und 15 her bereits auf der Radachse aufgefädelt sind. Der dermaßen vorgefügte Radsatz wird nunmehr wie folgt behandelt: die Presszylinder 13 und die Zentrierzylinder 12 stehen in ihrer jeweiligen Startposition, d.h., sie sind in die Gehäuse 10 und 11 eingefahren. Sodann fahren die Press- 13 und die Zentrierzylinder 12 gleichzeitig positionsgeregelt in eine Vorposition. Dabei bleiben die Presszylinder 13 zunächst in der Vorposition stehen. Danach fahren die Zentrierzylinder 12 positionsgeregelt weiter vor, bis sie die äußeren Enden 14 und 15 der Radachse 3 berühren. Hierbei ergibt sich ein Druckanstieg in den Zentrierzylindern 12. Die Presszylinder 13 hingegen verbleiben noch immer in ihrer Vorposition. Der das Ende 15 berührende Zentrierzylinder 12 wird in Kraftregelung umgeschaltet, während der das Ende 14 berührende Zentrierzylinder 12 in der Positionsregelung verbleibt. Sodann fahren die beiden Presszylinder 13 positionsgeregelt weiter und positionieren die Räder 1 und 2 auf der Radachse 3, dies ist der eigentliche Pressvorgang. Sobald der Pressvorgang beendet ist, fahren die Presszylinder 13 wieder positionsgeregelt in die Gehäuse 10 und 11 zurück. Die Zentrierzylinder 12 verbleiben indes noch in ihrer Positions- bzw. Kraftregelung. Danach erst erfolgt das Einfahren der Zentrierzylinder 12 in ihre jeweiligen Gehäuse 10 und 11 ebenfalls positionsgeregelt.

Die Ergebnisse zeigen, dass das System der hydraulischen Radsatzpressung stabil arbeitet und ein gutes Führungsverhalten aufweist. Der statische Regelfehler, Positioniergenauigkeit, beträgt beim Kolben des Zentrierzylinders weniger als 0,2 mm und beim Kolben des Presszylinders weniger als 0,4 mm. Die absolute Positioniergenauigkeit hängt von der Berücksichtigung der Aufweitung der Rahmenkonstruktion 4 ab. Wird die Aufweitung der Rahmenkonstruktion 4 nicht bei der Sollwertberechnung berücksichtigt, erhöht sich der Regelfehler entsprechend der Aufweitung. Im vorliegenden Fall wurde die Aufweitung der Rahmenkonstruktion, da bekannt, ideal zu 100 Prozent berücksichtigt.

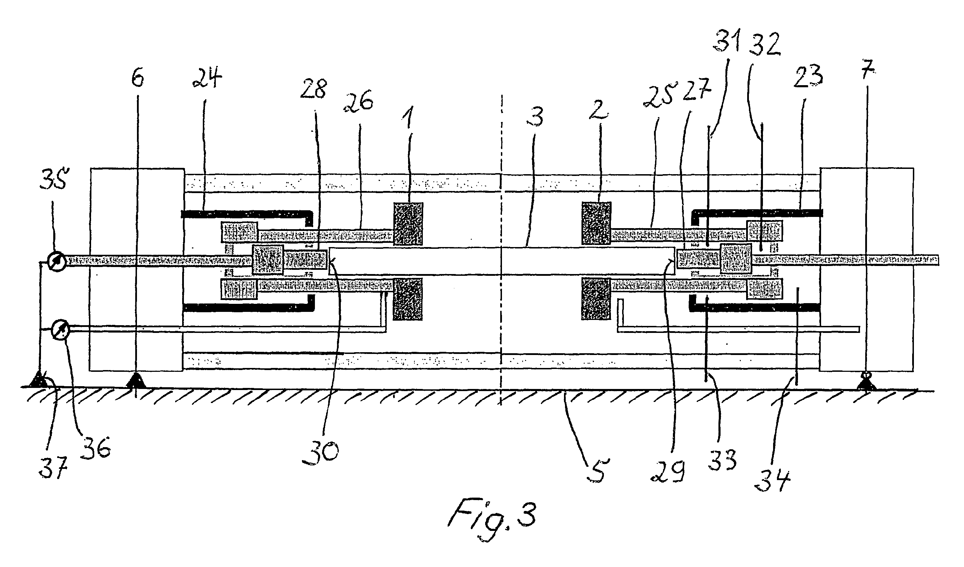

Bei der in Fig. 3 gezeigten Ausführungsform wurden die Gehäuse 23 und 24 gegenüber den Gehäusen 10 und 11 der Fig. 1 geändert. In den Gehäusen 23 und 24 ist zunächst einmal jeweils ein Presszylinder 25 und 26 längsverschiebbar gelagert. Der Kolben des Presszylinders 25 greift an der Radscheibe 2 an und der Kolben des Presszylinders 26 an der Radscheibe 1. Innerhalb der beiden Presszylinder 25 und 26 ist jeweils ein Zentrierzylinder 27 und 28 teleskopartig längsverschiebbar angeordnet. Der Zentrierzylinder 27 greift am äußeren Ende 29 und der Zentrierzylinder 28 am äußeren Ende 30 der Radachse 3 an. Äußere Anschlüsse 31 und 32 versorgen die Zentrierzylinder 27 und 28 mit dem Druckmittel und äußere Anschlüsse 33 und 34 versorgen die Presszylinder 25 und 26 mit dem erforderlichen Druckmittel. Ähnlich wie bei der Ausführungsform nach der Fig. 1 sind die Zentrierzylinder 27 und 28 mit einer Messeinrichtung 35 und die Presszylinder 25 und 26 mit einer Messeinrichtung 36 verbunden, welche ihrerseits ihre Abstützung 37 auf dem Fundament 5 finden. Die Zylindermantel der Zentrierzylinder 27 und 28 werden hierbei von den Kolben der Presszylinder 25 und 26 gebildet. Die Mechanik ist weniger aufwändig, die Durchmesser bauen kleiner und es ergeben sich kürzere Hübe. Jede Seite hat zwei Wegmesssysteme 35 und 36 und zwei Drucksensoren P1 und P2 (nicht gezeigt), welche entsprechend in den äußeren Anschlüssen 32 und 34 angeordnet sind, wie das an sich bekannt ist. Gegenüber der Ausführungsform der Fig. 1 zeichnet sich die Ausführungsform der Fig. 3 durch verringerte Kosten und kleinere Bauweise aus.

### Bezugszeichenliste

- 1: Radscheibe
- 2: Radscheibe
- 3: Radachse
- 4: Rahmenkonstruktion
- 5: Fundament
- 6: Pressenständer
- 7: Pressenständer
- 8: horizontale Traverse
- 9: horizontale Traverse
- 10: Gehäuse
- 11: Gehäuse
- 12: Zentrierzylinder
- 13: Presszylinder
- 14: äußeres Ende
- 15: äußeres Ende
- 16: äußerer Anschluss
- 17: äußerer Anschluss
- 18: äußerer Anschluss
- 19: äußerer Anschluss
- 20: Messeinrichtung
- 21: Messeinrichtung
- 22: Steuereinrichtung
- 23: Gehäuse
- 24: Gehäuse
- 25: Presszylinder
- 26: Presszylinder
- 27: Zentrierzylinder
- 28: Zentrierzylinder
- 29: äußeres Ende
- 30: äußeres Ende
- 31: äußerer Anschluss
- 32: äußerer Anschluss
- 33: äußerer Anschluss
- 34: äußerer Anschluss
- 35: Messeinrichtung
- 36: Messeinrichtung
- 37: Abstützung

## Patentansprüche

1. Hydraulische Radsatzpresse zum gleichzeitigen Aufpressen von zwei Rad- (1, 2) oder Bremsscheiben auf eine Radachse (3) mit einer auf einem Fundament (5) gelagerten Rahmenkonstruktion (4) aus zwei gleichartigen vertikalen Pressenständern (6, 7), die in einem gegenseitigen Abstand über horizontale Traversen (8, 9) miteinander fest verbunden sind und jeweils ein Gehäuse (10, 11, 23, 24) aufweisen zur Aufnahme eines Zentrierzylinders (12, 27, 28), der an einem Ende (14, 15), der Radachse (3) angreift, und eines konzentrisch zum Zentrierzylinder (12) angeordneten Presszylinders (13, 25, 26), der an der aufzupressenden Rad- (1, 2) oder Bremsscheibe angreift, sowie Steuereinrichtungen (22) zur Beaufschlagung jedes der beiden Zylinder (12, 13) mit einem Druckmittel,
**dadurch gekennzeichnet, dass** auf dem Fundament (5) Messeinrichtungen (20, 21, 35, 36, 37) vorgesehen sind, die den jeweiligen Hub der Zylinder (12, 13, 25, 26, 27, 28) der Radsatzpresse erfassen und mit einer Steuereinrichtung (22) verbunden sind, welche dazu vorgesehen ist, in Abhängigkeit vom Hub der Zylinder (12, 13, 25, 26, 27, 28) deren Beaufschlagung mit dem Druckmittel zu regeln.

2. Hydraulische Radsatzpresse nach Anspruch 1,
**dadurch gekennzeichnet, dass** das Gehäuse (10, 11)einemittige Zylinderkammer zur Aufnahme des Zentrierzylinders (12) aufweist und eine die mittige Zylinderkammer konzentrisch umgebende Ringkammer zur Aufnahme des Presszylinders (13).

3. Hydraulische Radsatzpresse nach Anspruch 1,
**dadurch gekennzeichnet, dass** das Gehäuse (23, 24) eine Zylinderkammer aufweist zur Aufnahme des Presszylinders (25, 26) und der Presszylinder (25, 26) eine mittige Zylinderkammer zur Aufnahme des Zentrierzylinders (27, 28).

4. Hydraulische Radsatzpresse nach Anspruch 2 oder 3,
**dadurch gekennzeichnet, dass** der Zentrierzylinder (12, 27, 28) und der Presszylinder (13, 25, 26) jeweils zwei Anschlüsse (16, 17, 31, 32 bzw. 18, 19, 33, 34) für das Druckmittel aufweisen.

5. Hydraulische Radsatzpresse nach Anspruch 1,
**dadurch gekennzeichnet, dass** die Messeinrichtungen (20, 21, 35, 36) aus einem Bandmaß bestehen, das jeweils mit einem Kolben eines Zentrier- (12, 27, 28) oder Presszylinders (13, 25, 26) verbunden ist und zugleich eine Verbindung (37) mit dem Fundament (5) hat.

## Claims

1. Hydraulic wheelset press for simultaneously pressing two wheel discs (1, 2) or brake discs onto a wheel axle (3) with a frame construction (4) set on a foundation (5) and comprising two identical vertical press stands (6, 7), which are fixed to each other at an equal distance by means of horizontal crossheads (8, 9), each press stand having a housing (10, 11, 23, 24) for retaining a centring cylinder (12, 27, 28), which engages the wheel axle (3) at one end (14, 15), and a press cylinder (13, 25, 26) aligned concentrically to the centring cylinder (12) that engages the wheel disc (1, 2) or brake disc to be pressed on, as well as control devices (22) for charging each of the two cylinders (12, 13) with a pressure medium, **characterised by** measuring devices (20, 21, 35, 36, 37) fitted on the foundation (5) that measure the stroke of the wheelset press cylinders (12, 13, 25, 26, 27, 28) and are connected to a control device (22), which is intended to regulate the charging of the cylinders (12, 13, 25, 26, 27, 28) with the pressure medium depending on their stroke.

2. Hydraulic wheelset press according to Claim 1, **characterised in that** the housing (10, 11) has a central cylinder chamber for retaining the centring cylinder (12) and a ring chamber for retaining the press cylinder (13), concentrically encircling the central cylinder chamber.

3. Hydraulic wheelset press according to Claim 1, **characterised in that** the housing (23, 24) has a cylinder chamber for retaining the press cylinder (25, 26) and that the press cylinder (25, 26) has a central cylinder chamber for retaining the centring cylinder (27, 28).

4. Hydraulic wheelset press according to one of Claims 2 or 3, **characterised in that** the centring cylinder (12, 27, 28) and the press cylinder (13, 25, 26) each have two connections (16, 17, 31, 32 and 18, 19, 33, 24 respectively) for the pressure medium.

5. Hydraulic wheelset press according to Claim 1, **characterised in that** the measuring devices (20, 21, 35, 36) comprise of a measuring tape that is connected to a piston of a centring (12, 27, 28) or press cylinder (13, 25, 26) and that also has a connection (37) to the foundation (5).

## Revendications

1. Presse pour essieu monté hydraulique pour le calage simultané de deux disques de roue (1, 2) ou de disques de frein sur un essieu (3) avec un cadre (4) logé sur un socle (5) composé de deux bâtis de presse verticaux de même type (6, 7), fixés entre eux par des traverses horizontales (8, 9) à distance l'un de l'autre. Chaque bâti de presse dispose d'un boîtier (10, 11, 23, 24) pour loger un vérin de centrage (12, 27, 28) qui touche une extrémité (14, 15) de l'essieu (3) et un vérin de compression (13, 25, 26) placé de manière concentrique par rapport au vérin de centrage (12) et qui touche le disque de frein ou de roue (1, 2) ainsi que de dispositifs de commande (22) pour alimenter les deux vérins (12, 13) à l'aide d'un agent de pression. La presse pour essieu montée est **caractérisée en ce que**
des dispositifs de mesure (20, 21, 35, 36, 37) placés sur le socle (5) déterminent la course de chaque vérin (12, 13, 25, 26, 27, 28) de la presse pour essieu monté et sont reliés à un dispositif de commande (22) qui est conçu pour réguler l'alimentation des vérins à l'aide d'un agent de pression en fonction de leur course (12, 13, 25, 26, 27, 28) .

2. Presse pour essieu monté hydraulique selon la revendication 1, **caractérisée en ce que** le boîtier (10, 11) présente une chambre cylindrique centrale pour loger le vérin de centrage (12) et une chambre circulaire entourant la chambre cylindrique centrale de manière concentrique pour loger le vérin de compression (13).

3. Presse pour essieu monté hydraulique selon la revendication 1,
**caractérisée en ce que** le boîtier (23, 24) présente une chambre cylindrique pour loger le vérin de compression (25, 26) et le vérin de compression (25, 26) présente une chambre cylindrique centrale pour loger le vérin de centrage (27, 28).

4. Presse pour essieu monté hydraulique selon une des revendications 2 ou 3 **caractérisée en ce que** chaque vérin de centrage (12, 27, 28) et chaque vérin de compression (13, 25, 26) dispose de deux raccordements (16, 17, 31, 32 ou 18, 19, 33, 34) pour l'agent de pression.

5. Presse pour essieu monté hydraulique selon la revendication 1
**caractérisée en ce que** les dispositifs de mesure (20, 21, 35, 36) se composent chacun d'un mètre-ruban relié par le piston d'un vérin de centrage (12, 27, 28) ou de compression (13, 25, 26) et aussi par une liaison (37) avec le socle (5).
